# EUROPEAN PATENT APPLICATION

(11) **EP 1 714 765 A1**
(43) Date of publication of application: **25.10.2006**
(21) Application number: 06425263.8
(22) Date of filing: 13.04.2006
(51) Int. Cl.: B29C 41/04, B01D 35/30

(54) **Linear polyethylene moulded shell or container for filter, and rotational moulding method.**

(30) Priority: 18.04.2005 IT PC20050010 U
(71) Applicant: Berardi, Renzo, 25080 Molinetto di Mazzano BS (IT); Mangiarini, Luigi, 25062 Concesio, Brescia (IT); Sandrini, Claudio, 46043 Castiglione delle Stiviere, Mantova (IT); Massa, Marco, 46040 Solferino, Mantova (IT)
(72) Inventor: Berardi, Renzo, 25080 Molinetto di Mazzano Brescia (IT); Mangiarini, Luigi, 25062 Concesio (Brescia) (IT); Massa, Marco, 46040 Solferino Mantova (IT); Sandrini, Claudio, 46043 Castiglione delle Stiviere Mantova (IT)

(57) **Abstract**

The model in question modifies and changes the ordinary and current methods of production of containers/shells, for the realization of sand-bed filters or other filtering system, to be used in the pool filtering sector.

Models on the market are mostly manufactured either of filament fiber-glass or steel, injection or blowing polyethylene.

As fiber glass characteristics are known, containers are manufactured and merchandised according to about 200 KPa (2,00 bar) working pressure; the polyethylene model with rotational moulding described can be on the contrary merchandised according to 350 KPa (3,50 bar) working pressure.

Moulding or injection polyethylene containers are too expensive because of the mould high cost. Blowing polyethylene containers do not accept requested thickness. Steel containers function is limited. Polyethylene, unlike resin glass and its working procedures and maintenance is an ecological material both as far as its usage is concerned and its maintenance and waste procedure.

Fig. 1 is a schematic view showing the model.

The model resulting is particularly suitable for the swimming pool sector.

## Description

The rotational moulding model of the shell or container, made of polythene, object of this description, changes and upsets the ordinary and actual shells models for sand bed filters or other filtering systems.

In particular, the model discussed here, to be used alone or in battery, is suitable as sand bed container for the filtering of fluids, especially in the pools sector.

Such model is suitable for any swimming pools, both in case of the realization of a new system and in case of replacing parts.

Today filtering is processed using shell filters realized either with filament glass fiber or with polyester resin, reinforced with glass fiber, or with steel , polyester, injection polythene, blown polythene, usually realized in two or more twin parts.

In the new model, the shell is realized with linear polythene in rotational moulding, which allows a relevant and monitored increase of the thickness of the shell, if compared with the two types above said (injection and blowing); thickness which is determinant to tolerate and/or contrast the pressions and depressions which may develop during the use.

The realization of the new shell model upsets moreover the ordinary and actual productive methods, based on the processing of filament glass fiber, steel or polythester processing. The procedure is more expensive from the ecological point of view than the one suggested, which assumes into the production process an ecological methodology, moreover quicker, by using a completely ecological substance, even in case of replacing parts.

Today, shells for filters are basically processed with filament glass fiber, a substance which, if compared to steel, has got the advantage of having a production cycle and a weight substantially inferior during the production phases, packaging, transport and setting.

Glass fiber, on the contrary, has got the disadvantage of being more fragile in respect to steel, being the shells of the actual filters processed by working pressure equal to about 2oo Kpa (2,00 bar).

The shell realized in linear polythene with rotational moulding system allows a doubling of this working pressure. The model, object of this ideation can contrast such values, both in pression and depression phase. In respect to glass fiber, which has got waste disposal problems, polythene can be completely recycled.

Today filament glass fiber filters are processed in different parts and assembled in a second time using polyester resin reinforced with glass fiber. The problem of waste disposal and resin packaging, beyond working security problems and health problems on working places still remains.

The model discussed here, on the contrary, is realized with linear polythene and rotational moulding, the fabric is atoxic and completely recyclable both in the production phase and in the waste phase, in case of parts replacement during the invase phase they are destined to.

The model is particularly suitable to be used in the pools sector, though a use in different sectors is not to be excluded.

### AIMS OF THE MODEL

The very **first aim** of the ideation of this model is to eliminate the disadvantages of the techniques known, or in use, by creating a flexible model to be used in different market sectors, even if pool sector seems to be the ideal one.

This can be extremely flexible, if compared to the products on the market and moreover particularly adaptable to the processing using tubes industry machines (tube industry), being all this more convenient in respect to the realization and control of glass fiber elements, steel or of moulding elements.

**Second aim** is the realization of a model which satisfies the requirements of a wider ecology of the products destined to the market.

**Third aim** is to obtain a cleaner esthetical shape, being the side protection now useless.

**Fourth aim** is to increase the level of the container pressure in order to improve the filtering action

**Fifth aim** is to create a practical model, not subject to cracking because of bumping. Polythene is moreover stable in respect to ultraviolet rays.

**Sixth aim** is avoiding aging of glass fiber both due to solar radiation and contact fluid: this is made possible because of the materials used in this model.

**All these aims** are achieved in accordance with the ideation, with the characteristics listed in the model, according to the enclosed independent claim 1 and following and in the method according to the independent claim 8 and 9.

Advantageous realizations of the ideation are clear from the dependent claims.

The model of the shell shaped, taken independent from the market usage sector, even if the best use is pools sector as according to the ideation, requires a sole body on which different elements are applied, necessary to filtering, and in its inside a sand bed is created -or other systems necessary to filtering.

With linear polythene it is therefore possible to realize a box composed -as volume - of a cylinder and two bulbs shaped pertinently.

Advantages of the model developed in such a way are immediately clear.

First of all an ecological and completely recyclable material, such as linear polythene, - is introduced into the production cycle; on the other side the use or chemical treatment of material with waste problems is taken into consideration, being the ideation basically based on ecological priority.

In such a way the model obtained is particularly suitable to be used in the pools sector and consequently in other different market sectors.

Further characteristics of the model will be clearer according to the following detailed description, which is referred to the pure descriptive forms of the model and therefore not a limit in its realisation, depicted in the enclosed drawings, where:
Picture.**1** is a frontal view of a polythene shell, obtained for the production of the element according to ideation.
Picture. **2** is a vertical section view.
Picture. **3** is a top view showing the loading mouth of sand or other components/systems for the creation of filtering.
Such figures-as already underlined- are just suggestion and not exhaustive figures, as dimensions are to be defined in accordance with the use.
Considering the intrinsical properties of the material, the realization of protections against bumping during the normal usagee of the model is not necessary.
With the help of the above said pictures, the model created, in particular for the pools sector, and its connected method of production are illustrated.
In picture 2 a vertical section is drawn, all the picture numbered with the referring number 1, independent from the market thickness to use.
Following, referring to picture number 2 the form of the realization of the idea is illustrated.
To the present shapes of realization of the idea of the model, several variations and details modifications can be set by a sector technician, all this within the limits of the ideation of the linear rotational polythene shell, as expressed in the enclosed claims.

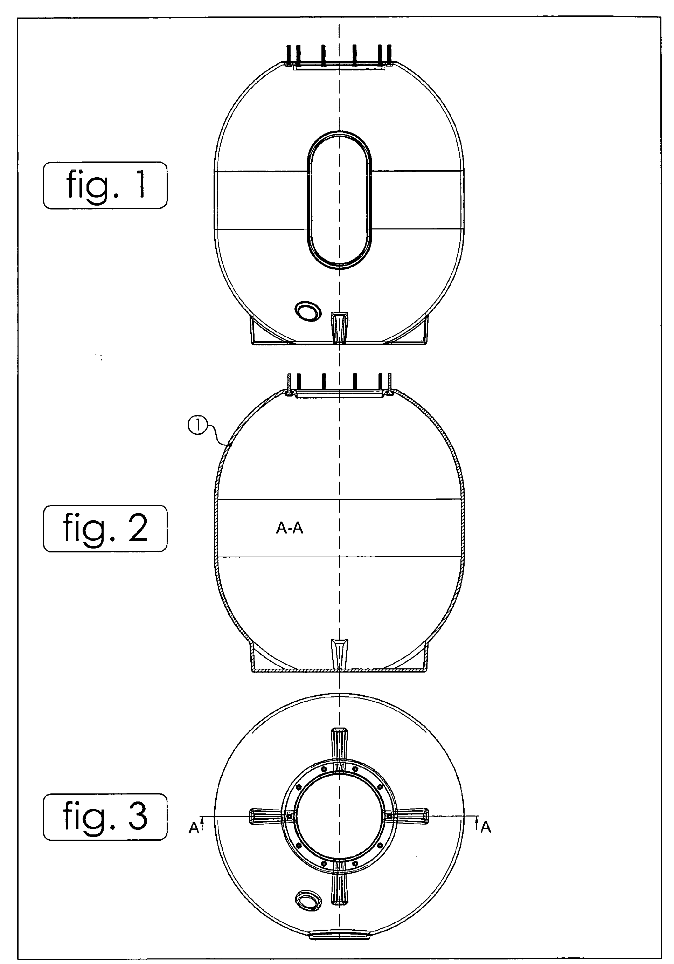

## Claims

1. Product in linear polythene with rotational moulding, to be used particularly in the system sector such as pools or invase - either for the agonistic, or playful or decorative purpose, principally based on a shell form-container - in linear polythene made in rotational moulding to be used as container/shell for sand bed or diatom or other filtering system. Such container (1) is made in linear polythene in rotational moulding, aimed for its thickness to support loads with security, working pressions and depressions, available in any colour or combination of colours.

2. Product in linear polythene in rotational moulding, according to claim 1, **characterized by** the fact that this shell/ container - (1) can get the ideal size to the function it is destined to.

3. Product in linear polythene in rotational moulding according to claim 1 and/or 2 **characterized by** the fact that the foronomia requested can be realized according to shape and size considered useful to the filtering process.

4. Product in linear polythene in rotational moulding according to any of the above said claims, **characterized by** the fact that this material has got a constant thickness or it can vary from a few millimetres to a few centimetres; these values are in any case determined according to the working pressures defined;

5. Product in linear polythene in rotational moulding according to any of the above said claims, **characterized by** the fact that it can be used as single piece or in battery in order to satisfy the several requirements of filtering.

6. Product in linear polythene in rotational moulding according to any of the above said claims, **characterized by** the fact that it can be used also in various sectors and areas different from the invase and pools.

7. Product in linear polythene in rotational moulding ideal to the contact of the fluids of the invase or pools.

8. Production method made by moulding with polythene powder, rotating inside a cylinder to define the forming, burning and cooling; the process is independent from the size of the model conceived.

9. Production method of a shell model - container - for sand filter / diatom or other filtering system, picture n.1, picture n.2, and picture n.3, realized according to a wholly ecological methodology.
